# EUROPEAN PATENT SPECIFICATION

(11) **EP 3 699 658 B1**
(45) Date of publication and mention of the grant of the patent: **24.09.2025**
(21) Application number: 18874831.3
(22) Date of filing: 02.07.2018
(51) Int. Cl.: G02B 6/44

(54) **PULL-OUT ASSEMBLY**
HERAUSZIEHANORDNUNG
ENSEMBLE DE SÉPARATION

(30) Priority: 06.11.2017 CN 201711077748
(43) Date of publication of application: 26.08.2020
(73) Proprietor: Huawei Technologies Co., Ltd., Longgang District Shenzhen, Guangdong 518129 (CN)
(72) Inventor: SHU, Siwen, Shenzhen Guangdong 518129 (CN); ZHANG, Jinjin, Shenzhen Guangdong 518129 (CN)
(74) Representative: Gill Jennings & Every LLP
(86) International application number: PCT/CN2018/094091
(87) International publication number: WO 2019/085534

(56) References cited:
- WO-A1-2017/103197
- WO-A1-2017/103197
- WO-A1-2018/046677
- CN-Y- 2 483 989
- CN-Y- 2 496 321
- US-A1- 2013 089 298
- US-A1- 2013 089 298

## Description

### TECHNICAL FIELD

This application relates to the field of signal transmission, and in particular, to a drawer-like assembly, a subrack, and an optical splitter box.

### BACKGROUND

As user requirements for bandwidth are growing, a conventional copper broadband access system becomes less capable of satisfying the user requirements. At the same time, an optical fiber communications technology having a huge bandwidth capacity is becoming mature and has application costs decreased year by year. A fiber access network becomes a strong competitor for a next-generation broadband access network. An optical distribution network (Optical Distribution Network, ODN) is an important part of the fiber access network.

The optical distribution network usually includes a feeder optical cable, an optical splitter box, a distribution optical cable, and the like. A plurality of trays configured to connect the feeder optical cable and the distribution optical cable are disposed in the optical splitter box. To facilitate maintenance of the optical cables in the tray, the tray may usually be designed as a module that can be pulled. For example, slide rail supports may be disposed in the optical splitter box, and slide rails matching the slide rail supports are fastened on two sides of the tray. When the tray needs to be maintained, a maintenance engineer may pull out the tray, and the tray may move for a distance on the slide rail supports, so that the maintenance engineer maintains the inside of the tray. After the maintenance is completed, the maintenance engineer may push in the tray to the optical splitter box.

The optical cables connected in the tray pass through at least one side of the tray. If no redundant optical cable is reserved on the at least one side of the tray, the tray may fail to be pulled out. Therefore, a redundant optical cable needs to be reserved (that is, an additional length of optical cable needs to be disposed) on at least one side of the outside of the tray. In this case, if the tray is pushed in to a box body after the maintenance is completed, redundant optical cables on the at least one side of the tray become comparatively disordered, so that efficiency in subsequent maintenance of the optical cables in the optical splitter box is comparatively low.

WO2017/103197 describes a hinge structure for pivotally mounting a first telecommunications element to a second telecommunications element which includes a hinge pin provided on the first element and a hinge pin receiver provided on the second element. The hinge pin defines a notch separating the pin into two pin halves.

US2013/089298 describes a fiber optic module which includes a main housing portion defining fiber optic connection locations for connecting cables to be routed through the frame and a cable management portion for guiding cables between the main housing portion and the frame.

WO2018/046677describes a fiber optic telecommunications device which includes a first fiber optic connection location defined on the telecommunications device, wherein a plurality of optical fibers extends into the telecommunications device from the first fiber optic connection location.

### SUMMARY

The present invention is defined by the appended claims. Embodiments not falling within the scope of the claims are exemplary only.

This application provides a drawer-like assembly, a subrack, and an optical splitter box, to resolve a problem that efficiency in subsequent maintenance of optical cables in the optical splitter box is comparatively low in a related technology.

Beneficial effects of the technical solutions provided in the embodiments of this application are as follows:

According to the drawer-like assembly, the subrack, and the optical splitter box provided in the example embodiments of this application, when the cables are disposed in the drawer-like assembly, the redundant cables may be disposed on the sliding channel of the slide rail. When the tray is in the pulled-out state, the redundant cables are located outside the drawer-like assembly; when the tray is in the non-pulled-out state, the redundant cables are located inside the drawer-like assembly. Therefore, on the premise that it is ensured that the drawer-like assembly can be properly pulled out or pushed in, this can effectively avoid disorder of the redundant cables outside the drawer-like assembly, and effectively improve efficiency in subsequent maintenance of the cables in the optical splitter box. In addition, the ratio of the velocity of the tray relative to the slide rail support to the velocity of the slide rail relative to the slide rail support in the draw-like assembly is the fixed value. Therefore, in the process of pulling out or pushing in the tray, the force is evenly applied to the left and right sides of the tray, to avoid hindering movement of the tray due to the force on the cables disposed in the tray, so that the tray can be properly pulled out or pushed in, and reliability of using the tray can be effectively improved. When the ratio of the velocity of the tray relative to the slide rail support to the velocity of the slide rail relative to the slide rail support is 2: 1, if the cables are disposed in the drawer-like assembly, bending can be avoided when the redundant cables on the sliding channel move to the outside of the drawer-like assembly in the process of pulling the tray, and the cables can be protected.

### BRIEF DESCRIPTION OF DRAWINGS

FIG. 1 is a schematic structural diagram of an optical splitter box according to an example embodiment of this application;
FIG. 2 is a top view of a drawer-like assembly according to an example embodiment of this application;
FIG. 3A is a schematic structural diagram of a slide rail according to an example embodiment of this application;
FIG. 3B is another schematic structural diagram of a slide rail according to an example embodiment of this application;
FIG. 4 is a schematic structural diagram of a slide rail support according to an example embodiment of this application;
FIG. 5A is a schematic diagram of a bottom structure of a tray according to an example embodiment of this application;
FIG. 5B is a schematic diagram of a front structure of a tray according to an example embodiment of this application;
FIG. 6A is an effect diagram of a drawer-like assembly in which cables are disposed and that is in a non-pulled-out state according to an example embodiment of this application;
FIG. 6B is an effect diagram of a drawer-like assembly in which cables are disposed and that is in a pulled-out state according to an example embodiment of this application;
FIG. 7 is a simplified diagram of tray movement when a drawer-like assembly is under an external effect according to an example embodiment of this application;
FIG. 8 is a locally enlarged diagram of an adapter fastening part according to an example embodiment of this application;
FIG. 9A is a schematic structural diagram of a subrack according to an example embodiment of this application;
FIG. 9B is another schematic structural diagram of a subrack according to an example embodiment of this application;
FIG. 9C is a schematic structural diagram of a subrack support according to an example embodiment of this application; and
FIG. 9D is an effect diagram of a drawer-like assembly in which cables are disposed according to an example embodiment of this application.

### DESCRIPTION OF EMBODIMENTS

To make the objectives, technical solutions, and advantages of this application clearer, the following further describes the implementations of this application in detail with reference to the accompanying drawings.

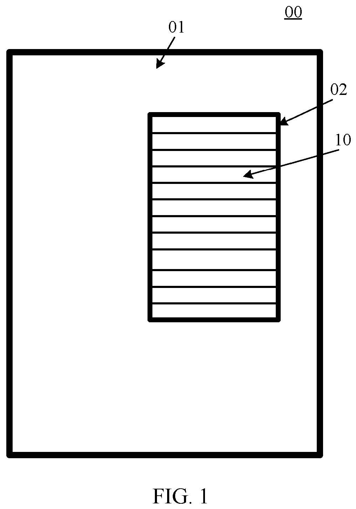

An example embodiment of this application provides an optical splitter box. FIG. 1 is a schematic structural diagram of an optical splitter box 00 according to an example embodiment of this application. The optical splitter box 00 may include a box body 01. A subrack 02 is disposed in the box body 01, and a plurality of drawer-like assemblies 10 are disposed in the subrack 02. Cables may be disposed in the drawer-like assembly 10. For example, the drawer-like assembly 10 may be used to connect a feeder optical cable and a distribution optical cable.

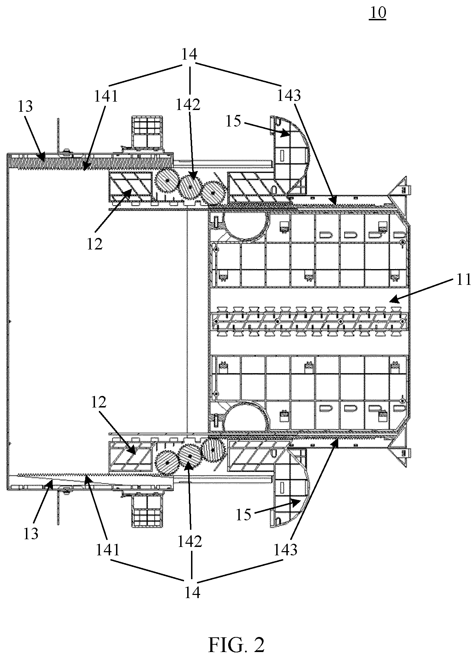

FIG. 2 is a top view of a drawer-like assembly 10 according to an example embodiment of this application. The drawer-like assembly 10 includes a tray 11, two slide rails 12, two slide rail supports 13, and a synchronous drive mechanism 14. The tray 11 is configured to dispose cables. Optionally, the cable may be an electrical cable or an optical cable, and the optical cable may include one or more optical fibers.

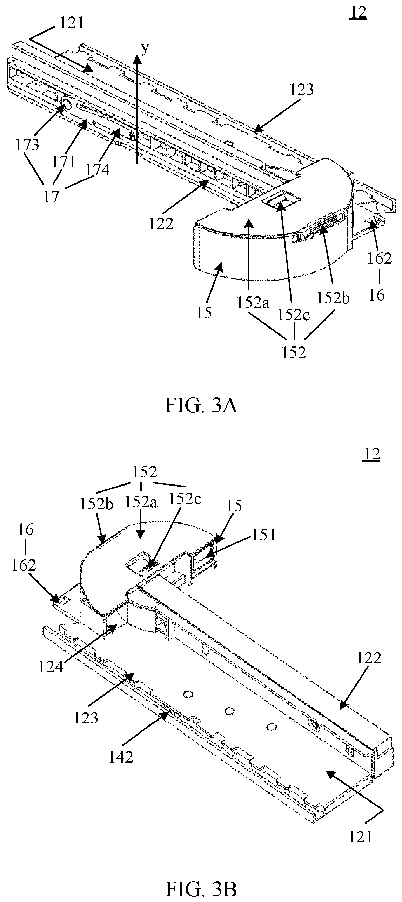

For a structure of each of the two slide rails 12, refer to FIG. 3A and FIG. 3B. FIG. 3A is a schematic structural diagram of a slide rail 12 according to an example embodiment of this application, and FIG. 3B is another schematic structural diagram of a slide rail 12 according to an example embodiment of this application. The slide rail 12 includes a sliding channel 121, and a clamping part 122 and a bearing part 123 that are located on two opposite sides of the sliding channel 121. Each clamping part 122 is clamped to one slide rail support 13, and the bearing part 123 is configured to support the tray 11.

As shown in FIG. 2, the synchronous drive mechanism 14 includes a first drive part 141 disposed in the slide rail support 13, a second drive part 142 disposed in the slide rail 12, and a third drive part 143 disposed in the tray 11. When the tray 11 is under an external effect (for example, the external effect may be pulling force applied to the tray 11 or pressure applied to the tray 11), the tray 11, the slide rail 12, and the slide rail support 13 can move relative to each other with cooperation of the first drive part 141, the second drive part 142, and the third drive part 143.

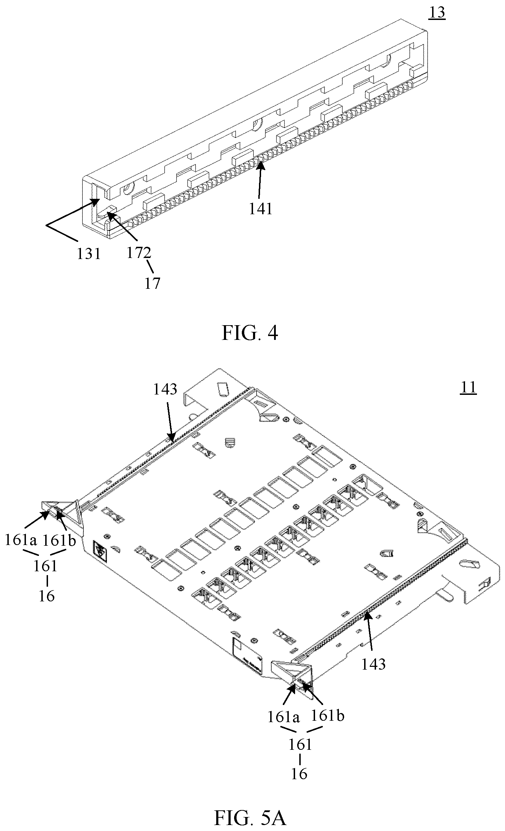

To clearly represent a position relationship between the slide rail support and the first drive part, and a position relationship between the slide rail and the clamping part, refer to FIG. 4. FIG. 4 is a schematic structural diagram of a slide rail support 13 according to an example embodiment of this application. The first drive part 141 of the synchronous drive mechanism may be disposed at the bottom of the slide rail support 13. A clamping groove 131 matching the clamping part of the slide rail is disposed in the slide rail support 13, and the slide rail may be clamped to the slide rail support 13 by using the clamping groove 131 and the clamping part of the slide rail.

In addition, to clearly represent a position relationship between the tray and the third drive part, refer to FIG. 5A. FIG. 5A is a schematic diagram of a bottom structure of a tray 11 according to an example embodiment of this application. The third drive part 143 of the synchronous drive mechanism may be disposed at the bottom of the tray 11.

In this embodiment of this application, as shown in FIG. 2 and FIG. 3B, when cables are disposed in the drawer-like assembly 10, the cables may extend to the outside of the drawer-like assembly 10 over the sliding channel 121. It is assumed that a cable disposed in the tray 11 is a first cable, and when the tray is not pulled out, a cable on the sliding channel 121 is a second cable. The first cable is usually fastened in the tray 11. Because the tray 11 and the slide rail 12 can move relative to each other, in a process of pulling out the tray 11 (that is, applying pulling force to the tray 11), the second cable moves to the outside of the drawer-like assembly 10 under an effect of the first cable; in a process of pushing in the tray 11 (that is, applying pressure to the tray 11), the second cable moves into the drawer-like assembly 10 under an effect of the first cable. After the tray 11 is pushed in, the second cable is located on the sliding channel 121 again, and the second cable is a redundant cable. Therefore, when the tray 11 is in a non-pulled-out state, redundant cables are located inside the drawer-like assembly 10. This effectively avoids disorder of the redundant cables outside the drawer-like assembly, and effectively improves efficiency in subsequent maintenance of the cables in the optical splitter box. In addition, because the slide rail 12 and the slide rail support 13 can move relative to each other, the tray 11 in the drawer-like assembly 10 can be pulled out, to facilitate subsequent maintenance.

Optionally, as shown in FIG. 2, when the tray 11 is under an external effect, a ratio of a velocity of the tray 11 relative to the slide rail support 13 to a velocity of the slide rail 12 relative to the slide rail support 13 in the drawer-like assembly 10 is a fixed value. Therefore, in a process of pulling out or pushing in the tray 11 (that is, pulling out or pushing in the tray 11), force is evenly applied to left and right sides of the tray 11, to avoid hindering movement of the tray 11 due to force on the cables disposed in the tray 11, so that the tray 11 can be properly pulled out or pushed in, and reliability of using the tray 11 can be effectively improved. For example, the ratio of the velocity of the tray 11 relative to the slide rail support 13 to the velocity of the slide rail 12 relative to the slide rail support 13 may be 2.1:1, 2.2:1, 2:1, or the like. The fixed ratio may be set based on a specific pulling status, provided that the tray 11 can be entirely pulled out. This is not limited in this embodiment of this application.

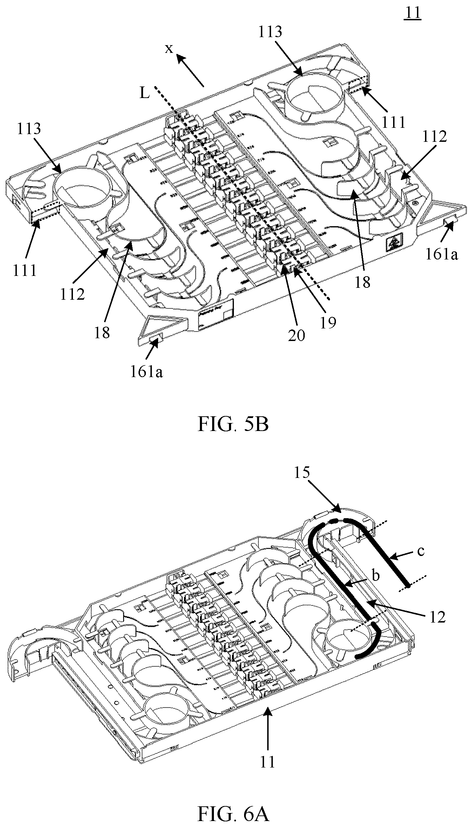

In this embodiment of this application, as shown in FIG. 2, the drawer-like assembly 10 may further include a first curved guiding structure 15. The first curved guiding structure 15 is fastened at a front end (namely, a right end shown in FIG. 2) of the slide rail 12. For a clearer position relationship between the first curved guiding structure 15 and the slide rail 12, refer to FIG. 3B. One end of the first curved guiding structure 15 communicates with an opening 124 at the front end of the slide rail 12, and a guiding opening 151 facing a rear end (namely, a left end shown in FIG. 2) of the slide rail 12 is disposed at the other end. FIG. 5B is a schematic diagram of a front structure of a tray 11 according to an example embodiment of this application. A cable transmission opening 111 is disposed at a rear end of the tray 11. When cables are disposed in the drawer-like assembly 10, the cables may be guided to the outside of the slide rail 12, that is, the outside of the drawer-like assembly 10, sequentially through the cable transmission opening 111, the sliding channel 121 of the slide rail 12, and the first curved guiding structure 15. In this case, cables extending to the outside of the drawer-like assembly 10 are routed toward the guiding opening 151 facing the rear end of the slide rail 12. The cables extending to the outside of the drawer-like assembly 10 may be disposed on two sides of the drawer-like assembly 10, so that space occupied by the cables in the optical splitter box can be reduced.

In actual application, an end cover structure may be disposed on the first curved guiding structure. The end cover structure may be removably connected to the first curved guiding structure. When cables are disposed in the drawer-like assembly, the end cover structure may be removed from the first curved guiding structure. After the cables pass through the first curved guiding structure, the end cover structure may be disposed on the first curved guiding structure again, so that a cable installation process can be simplified. In this embodiment of this application, the end cover structure may alternatively be movably connected to the first curved guiding structure. For example, as shown in FIG. 3A or FIG. 3B, the end cover structure 152 may include an end cover 152a, an end cover rotating shaft 152b, and an end cover buckle 152c. The end cover 152a may be movably connected to the first curved guiding structure 15 by using the end cover rotating shaft 152b, and the end cover 152a may be clamped to the first curved guiding structure 15 by using the end cover buckle 152c. When cables are disposed in the drawer-like assembly, the end cover buckle 152c may be pressed to cancel a clamping relationship between the end cover 152a and the first curved guiding structure 15. In this case, the end cover 152a can rotate around the end cover rotating shaft 152b. After the cables pass through the first curved guiding structure, the end cover 152a may be clamped to the first curved guiding structure 15 by using the end cover buckle 152c again.

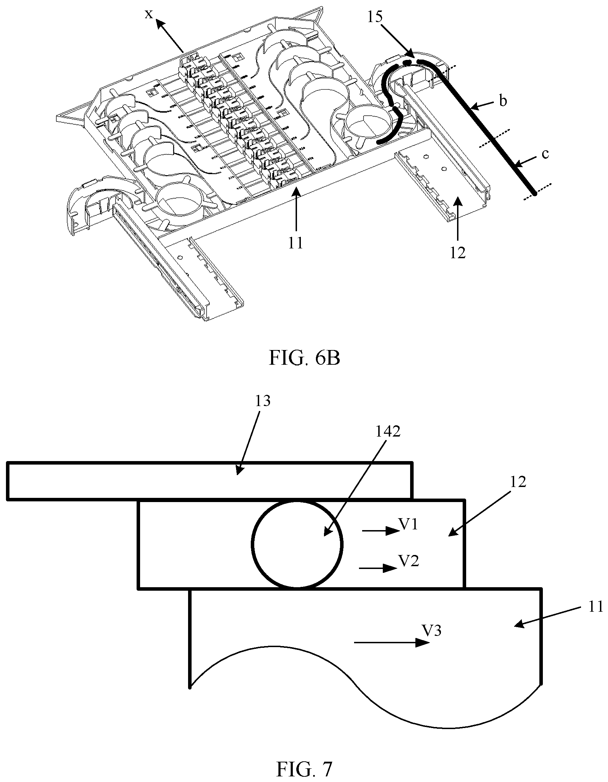

For example, FIG. 6A is an effect diagram of a drawer-like assembly in which cables are disposed and that is in a non-pulled-out state according to an example embodiment of this application. It is assumed that a cable on the sliding channel of the slide rail 12 is a second cable b, and a cable outside the drawer-like assembly 10 is a third cable c. Because the first curved guiding structure 15 is disposed, the third cable c may be located on either side of the drawer-like assembly 10. When the drawer-like assembly is in a pulled-out state, refer to FIG. 6B. FIG. 6B is an effect diagram of a drawer-like assembly in which cables are disposed and that is in a pulled-out state according to an example embodiment of this application. After the tray 11 is pulled out, the second cable b moves to the outside of the slide rail 12, and the second cable b is also located on either side of the drawer-like assembly 10. It should be noted that FIG. 6A and FIG. 6B show only structures of the tray 11 and the slide rail 12 in the drawer-like assembly, and do not show a structure of the slide rail support. In addition, because the slide rails 12 on the two sides of the drawer-like assembly 10 are symmetrically disposed, and force on and movement manners of cables located in the two slide rails 12 are the same, FIG. 6A and FIG. 6B show only a case in which the cable passes through one slide rail. For a case in which the cable passes through the other slide rail, refer to a corresponding part in the foregoing embodiment. Details are not described again in this embodiment of this application.

In actual application, as shown in FIG. 6B, the third cable c is usually fastened on either side of the drawer-like assembly 10. After the tray 11 is pulled out, the second cable b is usually in a straightened state. In a process in which the second cable b moves to the outside of the slide rail 12, the second cable b may be bent under an effect of the third cable c, that is, the third cable c generates extra pressure on the second cable b, and the second cable b may be damaged. To avoid damaging the second cable b, it needs to be ensured that, in a movement process of the second cable b, the second cable b located outside the slide rail 12 is always in the straightened state. For example, if the second cable b located outside the slide rail 12 is always in the straightened state, in the movement process of the second cable b, the first curved guiding structure 15 also needs to move in a movement direction x of the tray 11. In this case, the first curved guiding structure 15 is equivalent to a movable pulley. It can be learned from a movement velocity relationship of the movable pulley that, a ratio of a velocity at which the first curved guiding structure 15 moves in the movement direction x of the tray 11 to a movement velocity of the second cable b is 1:2. Therefore, the first curved guiding structure 15 may be a semicircular guiding groove, and an extension direction of the semicircular guiding groove is tangential to that of the sliding channel of the slide rail 12. In addition, it needs to be ensured that the ratio of the velocity of the tray 11 relative to the slide rail support to the velocity of the slide rail 12 relative to the slide rail support is 2:1.

Referring to FIG. 2, FIG. 3, and FIG. 5A, the first drive part 141 of the synchronous drive mechanism 14 is a first gear rack, the second drive part 142 is a gear group, and the third drive part 143 is a second gear rack. A length direction of the first gear rack may be parallel to that of the second gear rack, and the gear group is engaged with the first gear rack and the second gear rack. The gear group may include at least one gear. The at least one gear is sequentially engaged. Each gear in the gear group has a same size. To be specific, each gear has a same diameter and a same quantity of teeth. Optionally, the gear group includes an odd number of gears. This can ensure that a movement direction of the slide rail 12 is the same as that of the tray 11. When the gear group includes one gear, refer to FIG. 7. FIG. 7 is a simplified diagram of tray movement when a drawer-like assembly is under an external effect according to an example embodiment of this application. It is assumed that a movement velocity V1 of the slide rail 12 relative to the slide rail support 13 satisfies: V1 = v. Because the gear (namely, the second drive part 142) is fastened to the slide rail 12, a movement velocity V2 of the gear relative to the slide rail support 13 is also v. In other words, V2 satisfies: V2 = v. It can be learned from a movement velocity relationship between the gear and the gear rack that, a movement velocity V3 of the tray 11 relative to the slide rail support 13 satisfies: V3 = 2v. In this case, the ratio of the velocity of the tray 11 relative to the slide rail support 13 to the velocity of the slide rail 12 relative to the slide rail support is 2:1.

It should be noted that an example in which the gear group includes three gears is used for description in FIG. 2. Because the three gears have a same size, each of the three gears has a same drive velocity in a drive process, and a drive effect of the three gears is the same as that of one gear. Further, provided that each gear in the gear group has the same size, and the gear group includes an odd number of gears, it can be ensured that the ratio of the velocity of the tray relative to the slide rail support to the velocity of the slide rail relative to the slide rail support is 2:1.

Distances for which the gear group can move on the first gear rack and the second gear rack are equal, and both are greater than a preset distance threshold. This can ensure that the tray can be entirely pulled out, to facilitate maintenance of the inside of the tray. The preset distance threshold is less than or equal to half of a length of the slide rail.

The drawer-like assembly further includes a locking mechanism. The locking mechanism is configured to: when the tray is in a non-pulled-out state, lock the tray on the slide rail support. This can effectively prevent the tray from moving on the slide rail support due to an external factor when the tray is in the non-pulled-out state. Referring to FIG. 3A, FIG. 3B, and FIG. 5A, the locking mechanism 16 includes an elastic button 161 disposed on the tray 11, and a groove 162 that is disposed on the slide rail 12 and that matches the elastic button 161. The elastic button 161 may include an elastic plate 161a and a hooked protruding structure 161b disposed on the elastic plate 161a. When the tray 11 is in the non-pulled-out state, the hooked protruding structure 161b may be clamped to the groove 162, to limit movement of the tray 11 on the slide rail 12. When the tray 11 cannot move on the slide rail 12, under an effect of the gear group, the slide rail 12 cannot move on the slide rail support either. Therefore, the tray 11 may be locked on the slide rail support. When the tray 11 needs to be pulled out, the elastic plate 161a may be pushed, so that a clamping relationship between the hooked protruding structure 161 and the groove 162 is canceled, the tray 11 can move on the slide rail, and the tray 11 can be pulled out from the slide rail support.

Optionally, the drawer-like assembly may further include a limiting mechanism. The limiting mechanism is disposed between the slide rail and the slide rail support, and is configured to limit a distance for which the tray moves on the slide rail support. This can prevent the tray from detaching from the slide rail support, and avoid a problem that the drawer-like assembly needs to be repeatedly assembled because the tray detaches from the slide rail support. For example, referring to FIG. 3A and FIG. 4, the limiting mechanism 17 may include a stepped structure 171 disposed on a side that is of the slide rail 12 and that is close to the slide rail support (that is, disposed on the clamping part 122), and a protruding structure 172 disposed at an end of the slide rail support 13. When the slide rail 12 moves to a specified position, the stepped structure 171 may be clamped to the protruding structure 172. This can prevent the tray from detaching from the slide rail support 13.

In this embodiment of this application, the limiting mechanism 17 may further include a movable arm 174 connected to the stepped structure 171 by using a rotating shaft 173. Under external force, the movable arm 174 can drive the stepped structure 171 to rotate around the rotating shaft 173, to cancel a clamping relationship between the stepped structure 171 and the protruding structure 172. In actual application, the movable arm 174 and the stepped structure 171 are an integral structure, and the stepped structure 171 and the movable arm 174 may be fastened on the clamping part 122 by using the rotating shaft 173. After the stepped structure 171 is clamped to the protruding structure 172, if an end that is of the movable arm 174 and that is away from the rotating shaft 173 is under external force in a direction y, the movable arm 174 may rotate around the rotating shaft 173, so that the clamping relationship between the stepped structure 171 and the protruding structure 172 can be canceled, the tray can detach from the slide rail support 13, and the tray can be entirely maintained.

Optionally, as shown in FIG. 5B, the drawer-like assembly may further include at least one third curved guiding structure 18. The at least one third curved guiding structure 18 is disposed as removable in the tray 11. The tray 11 may further include a rectilinear guiding structure 112. Each third curved guiding structure 18 may be an arc-shaped guiding groove. An extension direction of the arc-shaped guiding groove is tangential to that of the rectilinear guiding structure 112. In this embodiment of this application, the tray 11 may further include a second curved guiding structure 113. The second curved guiding structure 113 is disposed at the cable transmission opening 111. The second curved guiding structure 113 may be a cylindrical structure, and an outer wall of the cylindrical structure is tangential to an extension direction of the slide rail. When cables are disposed in the drawer-like assembly, cables in the tray 11 may be divided into at least one bundle of cables in advance. The at least one bundle of cables may be in a one-to-one correspondence with the at least one third curved guiding structure 18. After passing through a corresponding third curved guiding structure 18, each bundle of cables converge into the rectilinear guiding structure 112, and then pass through the second curved guiding structure 113. The cables disposed in the tray 11 may be guided to the sliding channel of the slide rail. In actual application, because the at least one third curved guiding structure 18 is disposed as removable in the tray 11, the third curved guiding structure 18 may be designed into different shapes, so that the tray 11 can adapt to different types of cabling scenarios.

In this embodiment of this application, when cables are disposed in the drawer-like assembly, the cables inevitably need to be bent in the drawer-like assembly. Curved guiding structures (for example, the first curved guiding structure, the second curved guiding structure, and the third curved guiding structure) may usually be disposed in the drawer-like assembly, and the cables disposed in the drawer-like assembly may be bent by using the curved guiding structures. To avoid damaging the cables due to excessive bending, a minimum radius of each curved guiding structure in the drawer-like assembly is greater than or equal to a preset bending limit, where the bending limit may be 30 millimeters.

Optionally, as shown in FIG. 5B, the drawer-like assembly may further include an adapter fastening part 19. The adapter fastening part 19 is disposed as removable in the tray 11. The adapter fastening part 19 is configured to fasten adapters 20 of cables. In actual application, when cables are disposed in the drawer-like assembly, the adapters 20 may perform adaptation of the cables. For example, if the cables are a feeder optical cable and a distribution optical cable, both the feeder optical cable and the distribution optical cable may be connected to the adapters, so that connection between the feeder optical cable and the distribution optical cable can be implemented by using the drawer-like assembly. The adapters 20 may further fasten the cables in the tray 11.

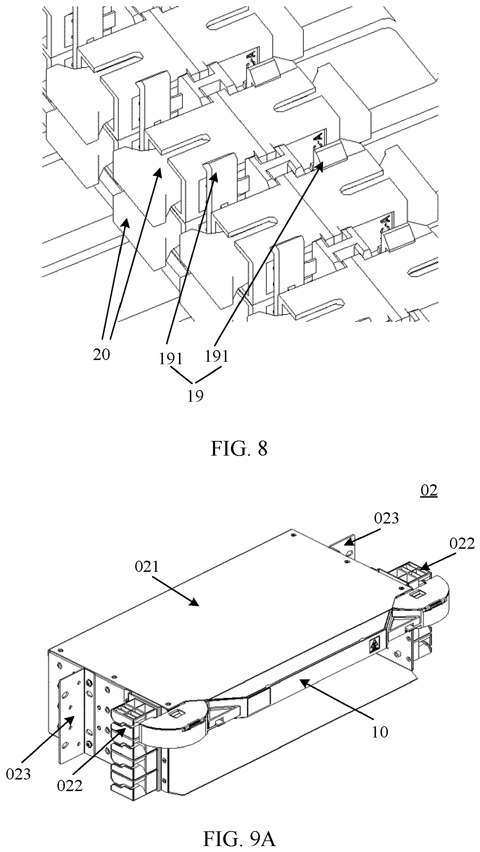

In this embodiment of this application, as shown in FIG. 5B, the tray 11 may be a symmetrical structure, the adapter fastening part 19 is disposed at an axis of symmetry L of the tray, and a length direction of the adapter fastening part 19 is parallel to the movement direction x of the tray 11. To clearly represent a position relationship between the adapter fastening part and the adapters, refer to FIG. 8. FIG. 8 is a locally enlarged diagram of an adapter fastening part according to an example embodiment of this application. The adapter fastening part 19 may include a plurality of buckle structures 191 arranged in an array. Each buckle structure 191 is configured to fasten at least one adapter 20 disposed in an overlay manner. Each buckle structure 191 may usually fasten at least two adapters 20 disposed in the overlay manner. In this case, a capacity for cables disposed in the drawer-like assembly can be increased, that is, more cables can be disposed in the drawer-like assembly, and cable adaptation efficiency can be improved.

In conclusion, according to the drawer-like assembly provided in this embodiment of this application, when cables are disposed in the drawer-like assembly, redundant cables may be disposed on the sliding channel of the slide rail. When the tray is in a pulled-out state, the redundant cables are located outside the drawer-like assembly; when the tray is in a non-pulled-out state, the redundant cables are located inside the drawer-like assembly. Therefore, on the premise that it is ensured that the drawer-like assembly can be properly pulled out or pushed in, this can effectively avoid disorder of the redundant cables outside the drawer-like assembly, and effectively improve efficiency in subsequent maintenance of the cables in the optical splitter box. In addition, the ratio of the velocity of the tray relative to the slide rail support to the velocity of the slide rail relative to the slide rail support in the draw-like assembly is the fixed value. Therefore, in the process of pulling out or pushing in the tray, the force is evenly applied to the left and right sides of the tray, to avoid hindering movement of the tray due to the force on the cables disposed in the tray, so that the tray can be properly pulled out or pushed in, and reliability of using the tray can be effectively improved. When the ratio of the velocity of the tray relative to the slide rail support to the velocity of the slide rail relative to the slide rail support is 2:1, if the cables are disposed in the drawer-like assembly, bending can be avoided when the redundant cables on the sliding channel move to the outside of the drawer-like assembly in the process of pulling the tray, and the cables can be protected.

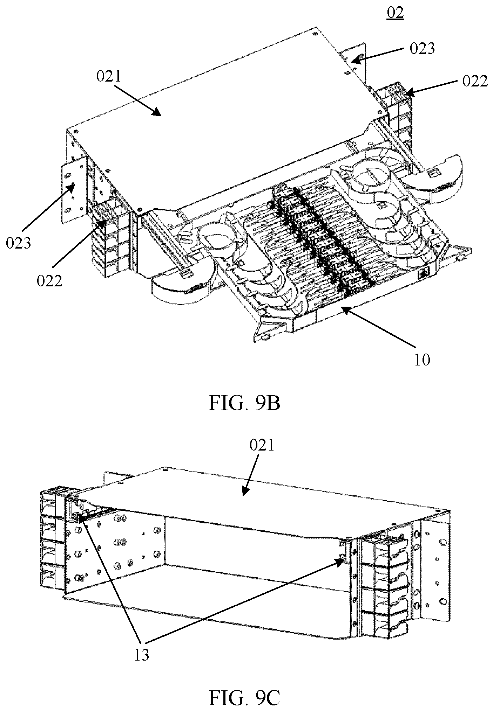

An embodiment of this application further provides a subrack. FIG. 9A is a schematic structural diagram of a subrack 02 according to an example embodiment of this application. The subrack 02 may include a subrack support 021. A plurality of draw-like assemblies 10 are disposed in the subrack support 021, and the plurality of draw-like assemblies 10 are disposed in the subrack support 021 in an overlay manner. The drawer-like assembly may be the drawer-like assembly shown in FIG. 2. It should be noted that one drawer-like assembly 10 shown in FIG. 9A is merely an example, and in FIG. 9A, a tray of the drawer-like assembly 10 is in a non-pulled-out state. For a schematic structural diagram of the subrack when the tray of the drawer-like assembly 10 is in a pulled-out state, refer to FIG. 9B.

Optionally, FIG. 9C is a schematic structural diagram of a subrack support 021 according to an example embodiment of this application. Two slide rail supports 13 of each drawer-like assembly may be fastened in the subrack support 021.

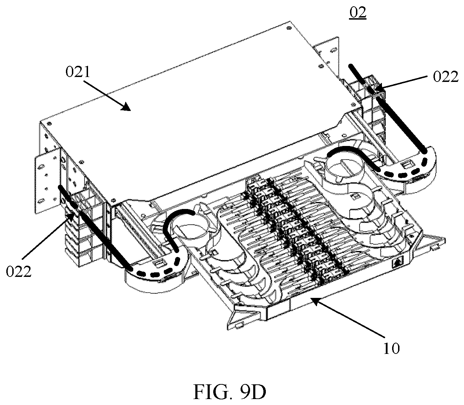

Optionally, as shown in FIG. 9A and FIG. 9B, the subrack 02 may further include a plurality of groups of cable threading structures 022. The plurality of groups of cable threading structures 022 are in a one-to-one correspondence with the plurality of drawer-like assemblies 10. Each group of cable threading structures 022 are disposed on two sides of the subrack 02, and are configured to support cables located outside a corresponding drawer-like assembly 10. For example, FIG. 9D is an effect diagram of a drawer-like assembly in which cables are disposed according to an example embodiment of this application. The cable threading structure 022 may support cables located outside the drawer-like assembly 10.

An embodiment of this application further provides an optical splitter box. The optical splitter box may include a box body. A subrack is disposed in the box body, and the subrack is the subrack shown in FIG. 9A. For example, for a structure of the optical splitter box, refer to FIG. 1.

Optionally, as shown in FIG. 9A and FIG. 9B, the subrack 02 further includes a subrack fastening structure 023. The subrack 02 may be fastened in the box body of the optical splitter box by using the subrack fastening structure.

## Claims

1. A drawer-like assembly, comprising:
a tray (11), two slide rails (12), two slide rail supports (13), and a synchronous drive mechanism (14); wherein
the tray is configured to dispose cables, each of the two slide rails comprises a sliding channel (121), and a clamping part (122) and a bearing part (123) that are located on two opposite sides of the sliding channel, each clamping part is clamped to one slide rail support, and the bearing part is configured to support the tray;
the synchronous drive mechanism comprises a first drive part (141) disposed in the slide rail support, a second drive part (142) disposed in the slide rail, and a third drive part (143) disposed in the tray; and
when the tray is under an external effect, the tray, the slide rail, and the slide rail support can move relative to each other with cooperation of the first drive part, the second drive part, and the third drive part;
wherein the first drive part is a first gear rack, the second drive part is a gear group, and the third drive part is a second gear rack;
the gear group comprises at least one gear, each gear in the gear group has a same size, and the at least one gear is sequentially engaged; and
a length direction of the first gear rack is parallel to that of the second gear rack, and the gear group is engaged with the first gear rack and the second gear rack;
wherein distances for which the gear group can move on the first gear rack and the second gear rack are equal, and both are greater than a preset distance threshold;
wherein the preset distance threshold is less than or equal to half of a length of the slide rail;
wherein the drawer-like assembly further comprises a locking mechanism (16), wherein the locking mechanism is configured to: when the tray is in a non-pulled-out state, lock the tray on the slide rail support; and
wherein the locking mechanism comprises an elastic button (161) disposed on the tray, and a groove (162) that is disposed on the slide rail and that matches the elastic button.

2. The drawer-like assembly according to claim 1, wherein
a ratio of a velocity of the tray relative to the slide rail support to a velocity of the slide rail relative to the slide rail support is a fixed value.

3. The drawer-like assembly according to claim 2, wherein
the drawer-like assembly further comprises a first curved guiding structure (15), the first curved guiding structure is fastened at a front end of the slide rail, one end of the first curved guiding structure communicates with an opening at the front end of the slide rail, and a guiding opening facing a rear end of the slide rail is disposed at the other end;
a cable transmission opening is disposed at a rear end of the tray; and
the cable transmission opening, the sliding channel of the slide rail, and the first curved guiding structure are configured to guide the cables to the outside of the slide rail.

4. The drawer-like assembly according to claim 3, wherein
the first curved guiding structure is a semicircular guiding groove, and an extension direction of the semicircular guiding groove is tangential to that of the sliding channel of the slide rail.

5. The drawer-like assembly according to claim 4, wherein
the ratio of the velocity of the tray relative to the slide rail support to the velocity of the slide rail relative to the slide rail support is 2: 1.

6. The drawer-like assembly according to any preceding claim, wherein
the gear group comprises an odd number of gears.

7. The drawer-like assembly according to any one of claims 3 to 4, wherein
the cable transmission opening is disposed at the rear end of the tray, the tray further comprises a second curved guiding structure (113), and the second curved guiding structure is disposed at the cable transmission opening.

8. The drawer-like assembly according to claim 7, wherein
the second curved guiding structure is a cylindrical structure, and an outer wall of the cylindrical structure is tangential to an extension direction of the slide rail.

9. A subrack (02), comprising:
a subrack support (021), wherein a plurality of drawer-like assemblies are disposed in the subrack support, and the drawer-like assembly is the drawer-like assembly according to any one of claims 1 to 8.

10. An optical splitter box, comprising:
a box body, wherein a subrack is disposed in the box body, and the subrack is the subrack according to claim 9.

## Patentansprüche

1. Schubladenartige Anordnung, umfassend:
einen Einsatz (11), zwei Gleitschienen (12), zwei Gleitschienenhalterungen (13) und einen synchronen Antriebsmechanismus (14); wobei
der Einsatz dazu konfiguriert ist, Kabel anzuordnen, jede der zwei Gleitschienen einen Gleitkanal (121) und ein Klemmteil (122) und ein Lagerteil (123) umfasst, die sich auf zwei gegenüberliegenden Seiten des Gleitkanals befinden, jedes Klemmteil an eine Gleitschienenhalterung geklemmt ist und das Lagerteil dazu konfiguriert ist, den Einsatz zu halten;
der synchrone Antriebsmechanismus ein erstes Antriebsteil (141), das in der Gleitschienenhalterung angeordnet ist, ein zweites Antriebsteil (142), das in der Gleitschiene angeordnet ist, und ein drittes Antriebsteil (143), das in dem Einsatz angeordnet ist, umfasst; und,
wenn der Einsatz einer äußeren Einwirkung ausgesetzt ist, sich der Einsatz, die Gleitschiene und der Gleitschienenhalterung in Zusammenarbeit mit dem ersten Antriebsteil, dem zweiten Antriebsteil und dem dritten Antriebsteil relativ zueinander bewegen können;
wobei das erste Antriebsteil eine erste Zahnstange ist, das zweite Antriebsteil eine Zahnradgruppe ist und das dritte Antriebsteil eine zweite Zahnstange ist;
die Zahnradgruppe mindestens ein Zahnrad umfasst, jedes Zahnrad in der Zahnradgruppe die gleiche Größe aufweist und das mindestens eine Zahnrad sequentiell in Eingriff steht; und
eine Längsrichtung der ersten Zahnstange parallel zu der der zweiten Zahnstange verläuft und die Zahnradgruppe mit der ersten Zahnstange und der zweiten Zahnstange in Eingriff steht;
wobei Abstände, um die sich die Zahnradgruppe auf der ersten Zahnstange und der zweiten Zahnstange bewegen kann, gleich sind und beide größer als ein voreingestellter Abstandsschwellenwert sind;
wobei der voreingestellte Abstandsschwellenwert weniger als die Hälfte der Länge der Gleitschiene oder gleich dieser ist;
wobei die schubladenartige Anordnung ferner einen Verriegelungsmechanismus (16) umfasst, wobei der Verriegelungsmechanismus zu Folgendem konfiguriert ist: wenn sich der Einsatz in einem nicht herausgezogenen Zustand befindet, Verriegeln des Einsatzes auf der Gleitschienenhalterung; und
wobei der Verriegelungsmechanismus einen elastischen Knopf (161), der auf dem Einsatz angeordnet ist, und eine Nut (162), die auf der Gleitschiene angeordnet ist und die mit dem elastischen Knopf zusammenpasst, umfasst.

2. Schubladenartige Anordnung nach Anspruch 1, wobei ein Verhältnis zwischen einer Geschwindigkeit des Einsatzes relativ zu der Gleitschienenhalterung und einer Geschwindigkeit der Gleitschiene relativ zu der Gleitschienenhalterung ein fester Wert ist.

3. Schubladenartige Anordnung nach Anspruch 2, wobei
die schubladenartige Anordnung ferner eine erste gekrümmte Führungsstruktur (15) umfasst, die erste gekrümmte Führungsstruktur an einem vorderen Ende der Gleitschiene befestigt ist, ein Ende der ersten gekrümmten Führungsstruktur mit einer Öffnung an dem vorderen Ende der Gleitschiene in Verbindung steht und eine Führungsöffnung, die einem hinteren Ende der Gleitschiene zugewandt ist, an dem anderen Ende angeordnet ist;
eine Kabelübertragungsöffnung an einem hinteren Ende des Einsatzes angeordnet ist; und
die Kabelübertragungsöffnung, der Gleitkanal der Gleitschiene und die erste gekrümmte Führungsstruktur dazu konfiguriert sind, die Kabel zu der Außenseite der Gleitschiene zu führen.

4. Schubladenartige Anordnung nach Anspruch 3, wobei
die erste gekrümmte Führungsstruktur eine halbkreisförmige Führungsnut ist und eine Erstreckungsrichtung der halbkreisförmigen Führungsnut tangential zu der des Gleitkanals der Gleitschiene verläuft.

5. Schubladenartige Anordnung nach Anspruch 4, wobei
das Verhältnis zwischen der Geschwindigkeit des Einsatzes relativ zu der Gleitschienenhalterung und der Geschwindigkeit der Gleitschiene relativ zu der Gleitschienenhalterung 2:1 ist.

6. Schubladenartige Anordnung nach einem der vorhergehenden Ansprüche, wobei
die Zahnradgruppe eine ungerade Anzahl von Zahnrädern umfasst.

7. Schubladenartige Anordnung nach einem der Ansprüche 3 bis 4,
wobei
die Kabelübertragungsöffnung an dem hinteren Ende des Einsatzes angeordnet ist, der Einsatz ferner eine zweite gekrümmte Führungsstruktur (113) umfasst und die zweite gekrümmte Führungsstruktur an der Kabelübertragungsöffnung angeordnet ist.

8. Schubladenartige Anordnung nach Anspruch 7, wobei
die zweite gekrümmte Führungsstruktur eine zylindrische Struktur ist und eine Außenwand der zylindrischen Struktur tangential zu einer Erstreckungsrichtung der Gleitschiene verläuft.

9. Baugruppenträger (02), umfassend:
eine Baugruppenträgerhalterung (021), wobei eine Vielzahl von schubladenartigen Anordnungen in der Baugruppenträgerhalterung angeordnet ist und die schubladenartige Anordnung die schubladenartige Anordnung nach einem der Ansprüche 1 bis 8 ist.

10. Optischer Verteilerkasten, umfassend:
einen Kastenkörper, wobei ein Baugruppenträger in dem Kastenkörper angeordnet ist und der Baugruppenträger der Baugruppenträger nach Anspruch 9 ist.

## Revendications

1. Ensemble de type tiroir, comprenant :
un plateau (11), deux rails coulissants (12), deux supports de rails coulissants (13), et un mécanisme d'entraînement synchrone (14) ; dans lequel
le plateau est configuré pour disposer des câbles, chacun des deux rails coulissants comprend un canal coulissant (121), et une partie de serrage (122) et une partie de palier (123) qui sont situées sur deux côtés opposés du canal coulissant, chaque partie de serrage est serrée sur un support de rail coulissant, et la partie de palier est configurée pour supporter le plateau ; le mécanisme d'entraînement synchrone comprend une première partie d'entraînement (141) disposée dans le support de rail coulissant, une deuxième partie d'entraînement (142) disposée dans le rail coulissant, et une troisième partie d'entraînement (143) disposée dans le plateau ; et
lorsque le plateau est soumis à un effet externe, le plateau, le rail coulissant, et le support de rail coulissant peuvent se déplacer l'un par rapport à l'autre avec la coopération de la première partie d'entraînement, de la deuxième partie d'entraînement et de la troisième partie d'entraînement ;
dans lequel la première partie d'entraînement est un premier engrenage à crémaillère, la deuxième partie d'entraînement est un groupe d'engrenages et la troisième partie d'entraînement est un second engrenage à crémaillère ;
le groupe d'engrenages comprend au moins un engrenage, chaque engrenage du groupe d'engrenages a une même taille, et l'au moins un engrenage est séquentiellement en prise ; et
une direction de longueur du premier engrenage à crémaillère est parallèle à celle du second engrenage à crémaillère, et le groupe d'engrenages est en prise avec le premier engrenage à crémaillère et le second engrenage à crémaillère ;
dans lequel les distances sur lesquelles le groupe d'engrenages peut se déplacer sur le premier engrenage à crémaillère et le second engrenage à crémaillère sont égales, et les deux sont supérieures à un seuil de distance prédéfini ;
dans lequel le seuil de distance prédéfini est inférieur ou égal à la moitié de la longueur du rail coulissant ;
dans lequel l'ensemble de type tiroir comprend également un mécanisme de verrouillage (16), dans lequel le mécanisme de verrouillage est configuré pour : lorsque le plateau est dans un état non retiré, verrouiller le plateau sur le support de rail coulissant ; et
dans lequel le mécanisme de verrouillage comprend un bouton élastique (161) disposé sur le plateau, et une rainure (162) qui est disposée sur le rail coulissant et qui correspond au bouton élastique.

2. Ensemble de type tiroir selon la revendication 1, dans lequel un rapport entre une vitesse du plateau par rapport au support de rail coulissant et une vitesse du rail coulissant par rapport au support de rail coulissant est une valeur fixe.

3. Ensemble de type tiroir selon la revendication 2, dans lequel l'ensemble de type tiroir comprend également une première structure de guidage incurvée (15), la première structure de guidage incurvée est fixée à une extrémité avant du rail coulissant, une extrémité de la première structure de guidage incurvée communique avec une ouverture à l'extrémité avant du rail coulissant, et une ouverture de guidage faisant face à une extrémité arrière du rail coulissant est disposée à l'autre extrémité ;
une ouverture de transmission par câble est disposée à l'extrémité arrière du plateau ; et
l'ouverture de transmission par câble, le canal coulissant du rail coulissant et la première structure de guidage incurvée sont configurés pour guider les câbles vers l'extérieur du rail coulissant.

4. Ensemble de type tiroir selon la revendication 3, dans lequel la première structure de guidage incurvée est une rainure de guidage semi-circulaire, et une direction d'extension de la rainure de guidage semi-circulaire est tangentielle à celle du canal coulissant du rail coulissant.

5. Ensemble de type tiroir selon la revendication 4, dans lequel le rapport entre la vitesse du plateau par rapport au support de rail coulissant et la vitesse du rail coulissant par rapport au support de rail coulissant est de 2:1.

6. Ensemble de type tiroir selon une quelconque revendication précédente, dans lequel
le groupe d'engrenages comprend un nombre impair d'engrenages.

7. Ensemble de type tiroir selon l'une quelconque des revendications 3 et 4, dans lequel
l'ouverture de transmission de câble est disposée à l'extrémité arrière du plateau, le plateau comprend également une seconde structure de guidage incurvée (113), et la seconde structure de guidage incurvée est disposée au niveau de l'ouverture de transmission de câble.

8. Ensemble de type tiroir selon la revendication 7, dans lequel la seconde structure de guidage incurvée est une structure cylindrique, et une paroi extérieure de la structure cylindrique est tangentielle à une direction d'extension du rail coulissant.

9. Casier (02), comprenant :
un support de casier (021), dans lequel une pluralité d'ensembles de type tiroir sont disposés dans le support de casier, et l'ensemble de type tiroir est l'ensemble de type tiroir selon l'une quelconque des revendications 1 à 8.

10. Boîtier répartiteur optique, comprenant :
un corps de boîtier, dans lequel un casier est disposé dans le corps de boîtier, et le casier est le casier selon la revendication 9.
